## Europäisches Patentamt

## European Patent Office

## Office européen des brevets

(19)

(11) Numéro de publication: **0 107 588**
A1

(12)

# DEMANDE DE BREVET EUROPEEN

(21) Numéro de dépôt: 83402023.2

(22) Date de dépôt: 18.10.83

(51) Int. Cl.³: **G 01 S 13/52**, G 01 S 7/28, G 06 F 15/36

(30) Priorité: 22.10.82 FR 8217738

(71) Demandeur: **THOMSON-CSF, 173, Boulevard Haussmann, F-75379 Paris Cedex 08 (FR)**

(72) Inventeur: **Muller, Gaelle, THOMSON-CSF SCPI 173, bld Haussmann, F-75379 Paris Cedex 08 (FR)**
Inventeur: **Rotat, Gérard, THOMSON-CSF SCPI 173, bld Haussmann, F-75379 Paris Cedex 08 (FR)**
Inventeur: **Lepere, Guy, THONSON-CSF SCPI 173, bld Haussmann, F-75379 Paris Cedex 08 (FR)**

(43) Date de publication de la demande: 02.05.84
Bulletin 84/18

(84) Etats contractants désignés: **DE GB IT NL SE**

(74) Mandataire: **El Manouni, Josiane et al, THOMSON-CSF SCPI 173, Bld Haussmann, F-75379 Paris Cedex 08 (FR)**

(54) **Dispositif de détermination du seuil d'élimination d'échos fixes, notamment pour récepteur radar.**

(57) Ce dispositif de détermination du seuil d'élimination d'échos fixes par zones, notamment pour récepteur radar, dans lequel ce seuil est établi à chaque tour d'antenne, pour chaque zone, à partir des échos reçus pour cette zone lors des tours d'antenne précédent, comporte des moyens pour calculer la valeur moyenne $\mu$ de ces échos et des moyens pour calculer leur écart type $\sigma$, le seuil étant à $\mu + K\sigma$, où K est une constante.

Application notamment aux récepteurs radars.

ACTORUM AG

## DISPOSITIF DE DETERMINATION DU SEUIL D'ELIMINATION D'ECHOS FIXES, NOTAMMENT POUR RECEPTEUR RADAR

La présente invention concerne un dispositif de détermination du seuil d'élimination d'échos fixes, notamment pour récepteur radar.

Dans un récepteur radar, et plus particulièrement dans un radar de surveillance, il est important de procéder à l'élimination des échos fixes ou lentement mobiles, afin de ne laisser subsister que les échos correspondant à des cibles franchement mobiles.

Les échos fixes ou lentement mobiles sont en effet très visibles sur les consoles de visualisation et diminuent notablement le contraste et donc la détection.

Les échos fixes sont dus principalement à la réflexion des ondes radar sur les éléments constitutifs du paysage (nuages, mer, forêts, ...etc). Lorsque ces éléments sont agités de légers mouvements (par exemple lors d'un coup de vent), les échos qu'ils réfléchissent ne sont plus fixes mais lentement mobiles, d'où la nécessité d'éliminer les échos lentement mobiles au même titre que les échos fixes.

Pour cela, il est connu d'utiliser la technique dite "Area Moving Target Indicator" (ou plus couramment "Area MTI"). Cette technique, qui peut être appelée élimination d'échos fixes par zones, consiste à diviser la couverture radar en cellules élémentaires , et à comparer, à chaque tour d'antenne, le signal reçu de chaque cellule élémentaire au signal reçu lors du tour d'antenne précédent. Si ces deux signaux ont des amplitudes identiques ou voisines, on en déduit que la cellule élémentaire considérée renvoit un écho fixe ou lentement mobile. Si ces deux signaux ont des amplitudes très différentes, on en déduit le passage d'une cible mobile dans cette cellule élémentaire.

Une technique plus perfectionnée consiste à comparer le signal reçu à chaque tour d'antenne à un seuil établi à partir des signaux reçus au cours de plusieurs tours d'antenne précédents, afin de prendre en compte les variations des échos indésirables (ou clutter). Il est connu par exemple d'établir ce seuil en incrémentant ou en décrémentant le seuil précédemment établi suivant que l'amplitude du signal reçu est supérieure ou inférieure à ce seuil.

Il est également connu, d'après la demande de brevet français N°2 234 571 déposée au nom de la demanderesse, de perfectionner cette dernière méthode en ajoutant ou en retranchant au seuil ainsi établi une valeur déterminée de manière à conserver une probabilité de fausse alarme constante pour un nombre de tours d'antenne donné.

Tous ces procédés de détermination du seuil d'élimination des échos indésirables ont pour inconvénient de ne pas être suffisamment adaptés aux fluctuations du clutter.

Lorsque le seuil est simplement établi par incrémentation ou décrémentation, suivant l'amplitude du signal reçu, du seuil précédemment établi, ce seuil ne fait que refléter la valeur moyenne de l'amplitude du clutter, mais il ne tient aucun compte des fluctuations instantanées de l'amplitude du clutter autour de cette valeur moyenne.

La méthode consistant à ajouter ou à retrancher au seuil ainsi obtenu une valeur déterminée de manière à conserver une probabilité de fausse alarme constante pour un nombre de tours d'antenne donné permet bien de suivre les variations du clutter, mais à condition qu'elles soient suffisamment répétitives d'un tour d'antenne à l'autre. En revanche, si les variations du clutter ne sont pas suffisamment répétitives, cette méthode ne permet pas d'éliminer les échos correspondants, et suivant l'amplitude de ces échos, il y a alors risque de fausse alarme.

La présente invention a pour objet un dispositif de détermination du seuil d'élimination d'échos fixes permettant d'éviter ces inconvénients par une meilleure adaptation du seuil aux fluctuations du clutter, et notamment aux fluctuations non répétitives d'un tour d'antenne à l'autre.

Selon l'invention, le dispositif de détermination du seuil d'élimination d'échos fixes par zones, notamment pour récepteur radar, dans lequel ce seuil est établi à chaque tour d'antenne, pour chaque zone, à partir des échos reçus pour cette zone lors des tours d'antenne précédents, comporte des moyens pour calculer la valeur moyenne $\mu$ de ces échos, et des moyens pour calculer leur écart type $\sigma$, le seuil étant égal à $\mu + K\sigma$, où $K$ est une constante.

Suivant un autre aspect de l'invention, les moyens de calcul de la valeur moyennne et de l'écart type sont réalisés de manière particulièrement astucieuse à l'aide de filtres numériques récursifs opèrant sur des valeurs logarithmiques, ce qui permet de réduire sensiblement le nombre et la taille des mémoires nécessaires.

Les objets et caractéristiques de la présente invention apparaîtront plus clairement à l'aide de la description suivante d'exemples de réalisation, ladite description étant faite en relation avec les dessins ci-annexés dans lequels :

- la figure 1 représente les moyens de calcul de la valeur moyenne utilisés dans le dispositif suivant l'invention.

- la figure 2 représente un filtre numérique récursif utilisé selon l'art connu pour le calcul d'une valeur moyenne.

- la figure 3 représente les moyens de calcul de l'écart type utilisés dans le dispositif suivant l'invention.

- la figure 4 représente le dispositif de détermination de seuil suivant l'invention.

Sur ces différentes figures, des éléments identiques portent les mêmes références.

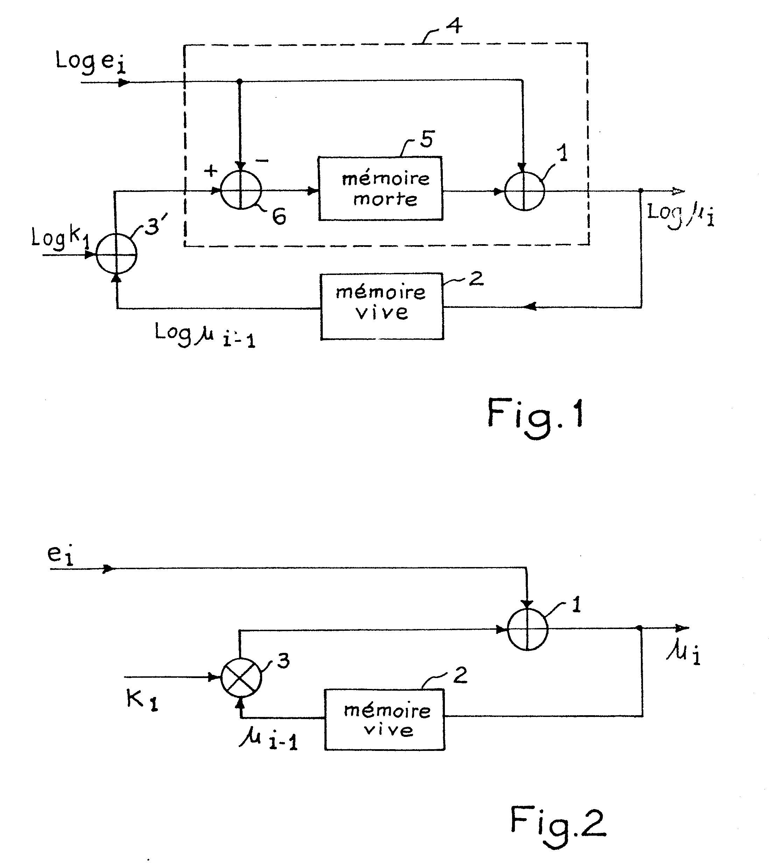

Sur la figure 1 on a représenté les moyens de calcul de la valeur moyenne $\mu$.

On désigne par $e_i$ l'écho reçu pour une zone donnée de la couverture radar, lors du tour d'antenne numéro i.

On désigne par $\mu_{i-1}$ la valeur moyenne de l'amplitude des échos reçus pour cette zone au cours des tours d'antenne précédant le tour numéro i, et par $\mu_i$ la valeur moyenne $\mu_{i-1}$ réactualisée à l'aide du signal incident $e_i$.

Pour réduire le nombre d'éléments binaires nécessaires au calcul, ces moyens de calcul opèrent sur des valeurs logarithmiques. Ceci est particulièrement intéressant dans le cas de l'application aux radars où, du fait de la dynamique importante des échos reçus, un traitement linéaire nécessiterait un nombre d'éléments binaires prohibitif.

Les moyens de calcul de la valeur moyenne constituent la transposition dans le domaine logarithmique du filtre numérique récursif représenté sur la figure 2.

Le filtre numérique récursif représenté sur la figure 2 comporte, de manière connue, un additionneur 1 qui reçoit d'une part le signal incident $e_i$, d'autre part la valeur moyenne précédente $\mu_{i-1}$ issue d'une mémoire vive 2, et multipliée par un coefficient $K_1$ (inférieur à 1) grâce à un multiplieur 3, et qui fournit la nouvelle valeur moyenne $\mu_i$.

Les moyens de calcul représentés sur la figure 1 comportent de la même façon un additionneur 1 et une mémoire vive 2. Le multiplieur 3 est remplacé par un additionneur 3' qui reçoit la valeur $\log K_1$.

Un circuit 4 de calcul du logarithme de la somme de deux valeurs à partir des logarithmes de ces deux valeurs est également rajouté par rapport à la figure 2.

Le circuit 4 est constitué de l'additionneur 1 qui reçoit d'une part le signal $\log e_i$, d'autre part le signal de sortie d'une mémoire morte 5 qui reçoit à son tour le signal de sortie d'un soustracteur 6, le soustracteur 6 recevant sur son entrée + le signal de sortie de l'additionneur 3', et sur son entrée – le signal $\log e_i$.

On explique maintenant le fonctionnement du circuit 4.

Le filtre de la figure 2 fournit un signal $\mu_i$ tel que :

$$\mu_i = e_i + K_1 \mu_{i-1}$$

On peut écrire :

$$\log (e_i + K_1 \mu_{i-1}) = \log e_i (1 + K_1 \frac{\mu_{i-1}}{e_i})$$
$$= \log e_i + \log (1 + K_1 \frac{\mu_{i-1}}{e_i})$$

On a :

$$\log (K_1 \frac{\mu_{i-1}}{e_i}) = \log K_1 + \log \mu_{i-1} - \log e_i$$

On observe que la valeur $\log (1 + K_1 \frac{\mu_{i-1}}{e_i})$ peut être déduite de la valeur $\log (K_1 \frac{\mu_{i-1}}{e_i})$ obtenue en sortie du soustracteur 6 par simple correction à l'aide de la mémoire morte 5 programmée de manière adéquate. La valeur $\log (e_i + K_1 \mu_{i-1})$ c'est-à-dire $\log \mu_i$, est alors obtenue en sortie de l'additionneur 1.

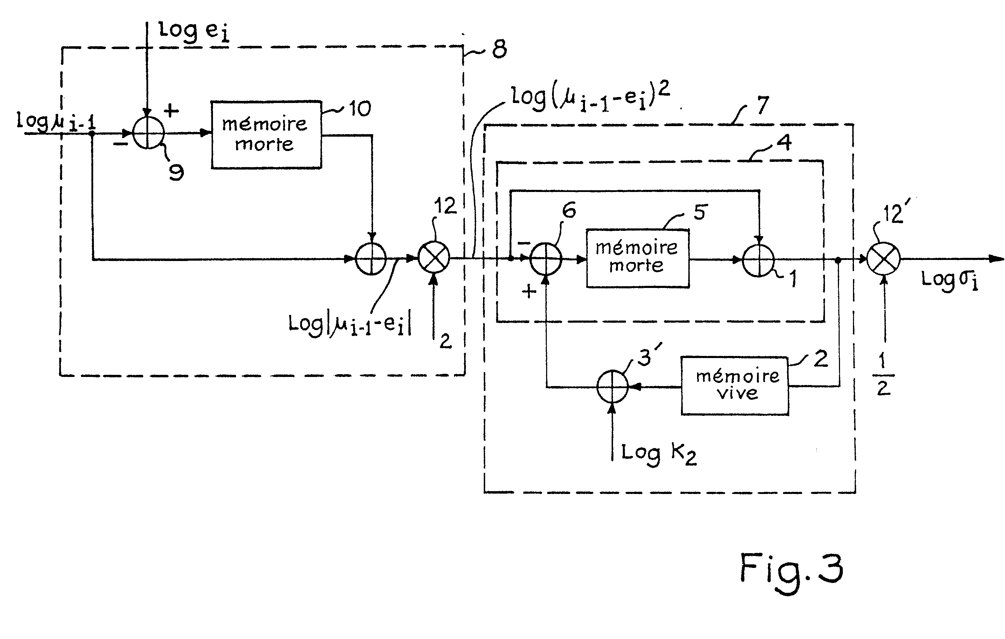

Sur la figure 3 on a représenté les moyens de calcul de l'écart type $\sigma$.

La variance $\sigma_i^2$ est la valeur moyenne du carré de la différence $\mu_{i-1} - e_i$ entre la moyenne précédente et le signal incident.

Comme les moyens de calcul de la valeur moyenne, les moyens de calcul de l'écart type opèrent sur des valeurs logarithmiques. Ils sont également réalisés à partir d'un filtre numérique récursif 7, transposé dans le domaine logarithmique, à l'entrée duquel est appliquée la valeur $\log (\mu_{i-1} - e_i)^2$ fournie par un circuit de calcul 8.

Le filtre 7 est constitué des mêmes éléments 1, 2, 3', 4 que le filtre représenté sur la figure 1, agencés de la même façon, à ceci près que le coefficient $K_1$ est remplacé par un coefficient $K_2$ également inférieur à 1.

Le filtre 7 calcule, à partir de la valeur $\log (\mu_{i-1} - e_i)^2$ fournie par le circuit 8, la valeur $\log \sigma_i^2$ égale à $\log ( (\mu_{i-1} - e_i)^2 + K_2 \sigma_{i-1}^2)$.

On obtient $\log \sigma_i$ en sortie d'un multiplieur 12' qui reçoit d'une part le signal de sortie du filtre 7, d'autre part le coefficient 1/2.

Le circuit de calcul 8 comporte un soustracteur 9 qui reçoit sur son entrée + le signal incident $\log e_i$ et sur son entrée – le signal $\log \mu_{i-1}$ fourni par la mémoire vive 2 de la figure 1, une mémoire morte 10 qui reçoit le signal de sortie de l'additionneur 9, un additionneur 11 qui reçoit d'une part le signal de sortie de la mémoire morte 10, d'autre part le signal $\log \mu_{i-1}$, et un multiplieur 12 qui reçoit d'une part le signal de sortie de l'additionneur 11, d'autre part le coefficient 2, et qui fournit le signal $\log (\mu_{i-1} - e_i)^2$.

Le circuit de calcul 8 opère de la façon suivante.

On peut écrire :

$$\log \left| \mu_{i-1} - e_i \right| = \log \mu_{i-1} \left| 1 - \frac{e_i}{\mu_{i-1}} \right|$$

$$= \log \mu_{i-1} + \log \left| 1 - \frac{e_i}{\mu_{i-1}} \right|$$

$\log \dfrac{e_i}{\mu_{i-1}}$ peut aussi s'écrire $\log e_i - \log \mu_{i-1}$ et $\log \left| 1 - \dfrac{e_i}{\mu_{i-1}} \right|$

6

s'obtient à partir de la valeur log $\dfrac{e_i}{\mu_{i-1}}$ obtenue en sortie du soustracteur 9, par correction à l'aide de la mémoire morte 10 programmée convenablement. La valeur log $(\mu_{i-1} - e_i)^2$ est alors obtenue en sortie du multiplieur 12 placé en sortie de l'additionneur 11.

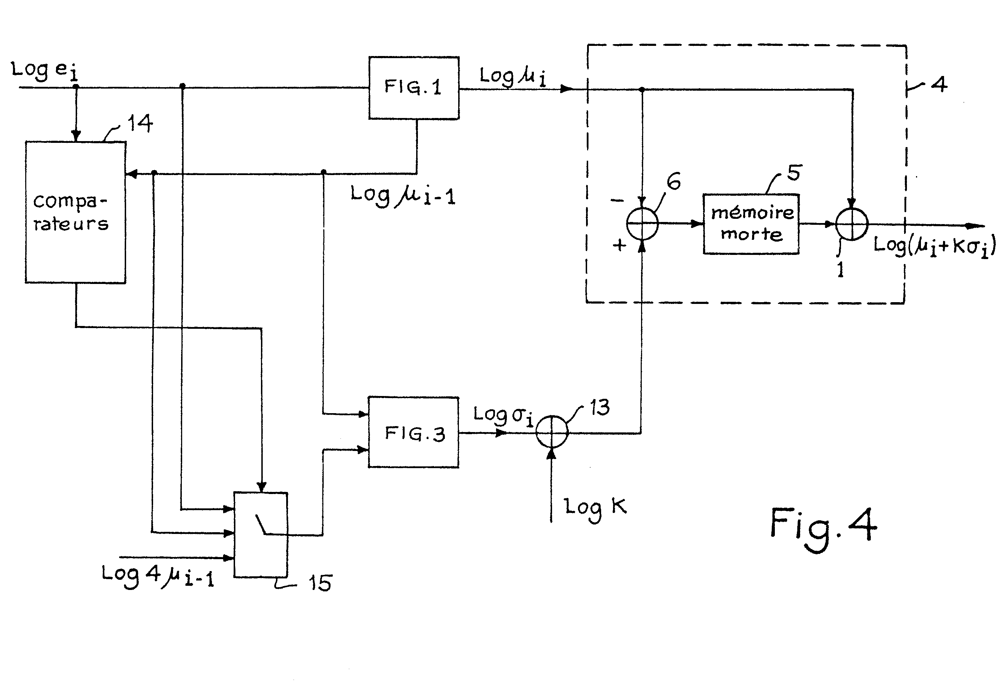

Sur la figure 4 on représenté le dispositif de détermination de seuil suivant l'invention.

Le seuil auquel est comparé l'écho $e_i$ reçu lors du tour d'antenne numéro i s'exprime sous la forme $\mu_i + K \sigma_i$ , où $\mu_i$ désigne la valeur moyenne des échos reçus au cours des tours d'antenne précédant le tour numéro i, $\sigma_i$ désigne leur écart type, et K est une constante que l'on détermine de manière à avoir une probabilité de fausse alarme donnée.

Comme les moyens de calcul de valeur moyenne et d'écart type, le dispositif de détermination de seuil opère sur des valeurs logarithmiques et fournit la valeur log $(\mu_i + K \sigma_i)$ qui sera comparée à la valeur log $e_i$.

La valeur log $(\mu_i + K \sigma_i)$ s'obtient à partir des valeurs log $\mu_i$ et log $K \sigma_i$ au moyen d'un circuit de calcul du logarithme de la somme de deux valeurs à partir des logarithmes de ces deux valeurs, identique au circuit 4 de la figure 1. La valeur log $\mu_i$ est disponible en sortie du circuit de la figure 1. La valeur log $K \sigma_i$ est obtenue à l'aide d'un additionneur 13 qui reçoit d'une part la valeur constante log K, d'autre part le signal log $\sigma_i$ disponible en sortie du circuit de la figure 3.

Le signal log $e_i$ n'est pas envoyé tel quel aux moyens de calcul de l'écart type (figure 3), mais après traitement à travers une série de comparateurs 14.

En effet, si la prise en compte de l'écart type dans l'expression du seuil permet bien de suivre les fluctuations instantanées du signal incident autour de sa valeur moyenne, elle risque toutefois de fausser la détection dans certaines circonstances.

Tout d'abord le passage d'une cible mobile dans la zone considérée peut entraîner dans certaines conditions (par exemple dans le cas du passage d'un avion dans une zone claire) un accroissement de l'écart type tel que le seuil ainsi obtenu soit supérieur à l'écho réfléchi par cette cible. Il faut donc limiter dans ce cas la montée de l'écart type.

7

De même, si un petit avion se présente dans la zone considérée à quelques tours d'antenne d'un gros avion, l'accroissement de l'écart type, et par là-même du seuil, entraînée par le passage du gros avion peut être suffisant pour empêcher la détection du petit avion. Il faut là aussi limiter la montée de l'écart type.

De même l'entrée d'un nuage dans la zone considérée ne doit pas entraîner une augmentation de l'écart type telle que la prise en compte de la disparition de ce nuage de la zone considérée en soit retardée.

Dans tous ces cas, il est donc nécessaire de limiter la montée de l'écart type pour que le seuil puisse être mis à jour rapidement.

A titre d'exemple, pour résoudre les problèmes posés par ces différents cas de figures, on pourra faire les comparaisons et prendre les décisions suivantes.

Dans le premier cas de figure (détection d'un avion), si $e_i$ est supérieur à $2\mu_{i-1}$, on réactualisera l'écart type non pas avec le signal incident $e_i$, mais avec la moyenne précédente $\mu_{i-1}$.

Dans le deuxième cas de figure (détection d'un petit avion qui en suit un gros), si $e_i$ est inférieur à $\dfrac{\mu_{i-1}}{4}$, on prendra également la moyenne précédente $\mu_{i-1}$ au lieu du signal incident $e_i$ pour le calcul de l'écart type.

Dans le troisième cas de figure (passage d'un nuage), si $e_i$ est supérieur à $4\mu_{i-1}$, on prendra $4\mu_{i-1}$ au lieu de $e_i$ pour le calcul de l'écart type.

Ceci a été représenté de manière symbolique sur la figure 4 à l'aide d'un commutateur 15 qui reçoit les signaux $\log e_i$, $\log \mu_{i-1}$ et $\log 4\mu_{i-1}$, et qui fournit, sur commande des comparateurs 14, l'un de ces signaux aux moyens de calcul de l'écart type (figure 3).

Toute la description ci-dessus a été faite pour une zone considérée de la couverture radar. Cette description est bien entendu valable pour l'ensemble des zones de la couverture radar, la capacité de la mémoire vive 2 étant alors prévue pour stocker la valeur moyenne et l'écart type relatifs à chaque zone pour un tour d'antenne. L'un des intérêts de la présente invention (limitation du volume mémoire nécessaire) apparaît alors de manière encore plus nette.

## REVENDICATIONS

1. Dispositif de détermination du seuil d'élimination d'échos fixes par zones, notamment pour récepteur radar, dans lequel ce seuil est établi à chaque tour d'antenne, pour chaque zone, à partir des échos reçus pour cette zone lors des tours d'antenne précédents, caractérisé en ce qu'il comporte des moyens pour calculer la valeur moyenne $\mu$ de ces échos et des moyens pour calculer leur écart type $\sigma$, le seuil étant égal à $\mu + K\,\sigma$, où $K$ est une constante.

2. Dispositif selon la revendication 1, caractérisé en ce que les moyens pour calculer la valeur moyenne $\mu$ des échos reçus précédemment comportent un filtre numérique récursif opérant sur des valeurs logarithmiques et comportant un circuit (4) de calcul du logarithme de la somme de deux valeurs à partir des logarithmes de ces deux valeurs, qui reçoit d'une part le logarithme de l'écho incident, d'autre part le signal de sortie d'un additionneur (3') qui reçoit à son tour d'une part une valeur constante $\log K_1$ (avec $K_1 < 1$) d'autre part le signal de sortie d'une mémoire vive (2) qui a elle-même son entrée reliée à la sortie du circuit (4) de calcul du logarithme de la somme de deux valeurs, la sortie de ce circuit (4) constituant la sortie des moyens de calcul de la valeur moyenne.

3. Dispositif selon l'une des revendications 1 et 2, caractérisé en ce que les moyens de calcul de l'écart type comportent premièrement un filtre numérique récursif opérant sur des valeurs logarithmiques et comportant un circuit (4) de calcul du logarithme de la somme de deux valeurs à partir des logarithmes de ces deux valeurs, qui reçoit d'une part la valeur $\log (\mu_{i-1} - e_1)^2$ où $e_i$ désigne l'écho incident et $\mu_{i-1}$ la valeur moyenne précédente, d'autre part le signal de sortie d'un additionneur (3') qui reçoit à son tour d'une part une valeur constante $\log K_2$ (avec $K_2 < 1$) d'autre part le signal de sortie d'une mémoire vive (2) qui a elle-même son entrée reliée à la sortie du circuit (4) de calcul du logarithme de la somme de deux valeurs, deuxièmement un multiplieur (12') muni d'une première entrée qui reçoit le signal de sortie du circuit de calcul (4), d'une deuxième entrée qui reçoit la valeur constante $1/2$ et d'une sortie qui constitue la sortie des moyens de calcul de l'écart type.

4. Dispositif selon la revendication 3, caractérisé en ce que la valeur log $(\mu_{i-1} - e_i)^2$ est obtenue en sortie d'un circuit (8) comportant un soustracteur (9) qui reçoit sur ses entrées + et - respectivement les valeurs log $e_i$ et log $\mu_{i-1}$, une mémoire morte (10) qui reçoit le signal de sortie du soustracteur (9), un additionneur (11) qui reçoit d'une part le signal log $\mu_{i-1}$, d'autre part le signal de sortie de cette mémoire morte (10), et un multiplieur (12) qui reçoit d'une part la valeur constante 2, d'autre part le signal de sortie de cet additionneur (11), et qui fournit le signal log $(\mu_{i-1} - e_i)^2$.

5. Dispositif selon l'une des revendications 1 à 4, caractérisé en ce qu'il opère sur des valeurs logarithmiques, la valeur log $(\mu + K\sigma)$ étant calculée à partir de la valeur log $\mu$ fournie par les moyens de calcul de la valeur moyenne, et à partir de la valeur log $K\sigma$, (elle-même obtenue à partir de la valeur log $\sigma$ fournie par les moyens de calcul de l'écart type), au moyen d'un circuit (4) de calcul du logarithme de la somme de deux valeurs à partir des logarithmes de ces deux valeurs.

6. Dispositif selon l'une des revendications 2, 3 et 5, caractérisé en ce que le circuit (4) de calcul du logarithme de la somme de deux valeurs à partir des logarithmes de ces deux valeurs comporte un soustracteur (6) qui reçoit sur ses entrées + et - respectivement les logarithmes de ces deux valeurs, une mémoire morte (5) qui reçoit le signal de sortie de ce soustracteur (6), et un additionneur (1) qui reçoit d'une part le signal de sortie de la mémoire morte (5), d'autre part le signal appliqué sur l'entrée - du soustracteur (6), et qui fournit le signal de sortie du circuit de calcul (4).

7. Dispositif selon l'une des revendications 1 à 6, caractérisé en ce que lorsque l'écho incident $e_i$ s'écarte trop de la valeur moyenne précédente $\mu_{i-1}$, il est remplacé par la valeur moyenne précédente $\mu_{i-1}$ ou par un multiple de celle-ci dans le calcul de l'écart type $\sigma_i$.

8. Dispositif selon la revendication 7, caractérisé en ce que lorsque l'écho incident $e_i$ est supérieur à 2 $\mu_{i-1}$, il est remplacé par $\mu_{i-1}$ dans le calcul de l'écart type $\sigma_i$.

9. Dispositif selon la revendication 7, caractérisé en ce que lorsque l'écho incident $e_i$ est inférieur à $\frac{\mu_{i-1}}{4}$, il est remplacé par $\mu_{i-1}$ dans le calcul de l'écart type $\sigma_i$.

10. Dispositif selon la revendication 7, caractérisé en ce que lorsque l'écho incident $e_i$ est supérieur à $4\mu_{i-1}$, il est remplacé par $4\mu_{i-1}$ dans le calcul de l'écart type $\sigma_i$.

Fig.1

Fig.2

Fig.3

2/3

0107588

Fig.4

3/3

0107588

**Office européen des brevets**

## RAPPORT DE RECHERCHE EUROPEENNE

Numéro de la demande

EP  83 40 2023

| Catégorie | Citation du document avec indication, en cas de besoin, des parties pertinentes | Revendication concernée | CLASSEMENT DE LA DEMANDE (Int. Cl. ³) |
|---|---|---|---|
| | **DOCUMENTS CONSIDERES COMME PERTINENTS** | | |
| Y,D | FR-A-2 234 571 (THOMSON-CSF) * Figures 2,3; page 1, ligne 1 - page 2, ligne 24; page 4, ligne 12 - page 6, ligne 20 * | 1-3,5 | G 01 S  13/52 G 01 S   7/28 G 06 F  15/36 |
| | --- | | |
| Y | US-A-3 995 270 (R.P. PERRY et al.) * Figures 4,5; colonne 5, ligne 42 - colonne 6, ligne 50 * | 1-3,5 | |
| | --- | | |
| A | IEEE JOURNAL OF OCEANIC ENGINEERING, vol. OE-2, no. 4, octobre 1977, pages 318-324, New York, US D. CURTIS SCHLEHER: Harbor sur- veillance radar detection performance" * Figure 5b; pages 321-324; paragraphe "CFAR processors in log-normal clutter" | 1-3,5 | |
| | --- | | |
| A | ELECTRONICS AND COMMUNICATIONS IN JAPAN, vol. 62-B, no. 1, 1979, pages 71-75, Scripta Publishing Co., Washington, US M. SEKINE et al.: "Suppression of weibull-distributed clutter" * En entier * | 1-3,5 | G 01 S H 03 H G 06 F |
| | --- | | |
| A | US-A-4 318 101 (TOSHIMITSU MUSHA et al.) | | |
| | ---                      -/- | | |

DOMAINES TECHNIQUES RECHERCHES (Int. Cl. ³)

Le présent rapport de recherche a été établi pour toutes les revendications

| Lieu de la recherche | Date d'achèvement de la recherche | Examinateur |
|---|---|---|
| LA HAYE | 11-01-1984 | CANNARD J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO Form 1503 03 82

0107588

Office européen
des brevets

**RAPPORT DE RECHERCHE EUROPEENNE**

Numéro de la demande

EP  83 40 2023

| | DOCUMENTS CONSIDERES COMME PERTINENTS | | Page 2 | |
|---|---|---|---|---|
| Catégorie | Citation du document avec indication, en cas de besoin, des parties pertinentes | Revendication concernée | CLASSEMENT DE LA DEMANDE (Int. Cl. ³) | |
| A | IEEE TRANSACTIONS ON AEROSPACE AND ELECTRONIC SYSTEMS, vol. AES-14, no. 5, septembre 1978, pages 823-826, New York, US M. SEKINE et al.: "Suppression of weibull-distributed clutters using a cell-averaging LOG/CFAR receiver" ----- | | | |
| | | | DOMAINES TECHNIQUES RECHERCHES (Int. Cl. ³) | |
| | Le présent rapport de recherche a été établi pour toutes les revendications | | | |

| Lieu de la recherche LA HAYE | Date d'achèvement de la recherche 11-01-1984 | Examinateur CANNARD J.M. |
|---|---|---|